(19) Europäisches Patentamt
European Patent Office
Office européen des brevets

(11) Numéro de publication: **0 022 047**
**A1**

(12) # DEMANDE DE BREVET EUROPEEN

(21) Numéro de dépôt: 80420077.2

(51) Int. Cl.³: C 08 L 27/06

(22) Date de dépôt: 24.06.80

(30) Priorité: 26.06.79 FR 7917265

(43) Date de publication de la demande: 07.01.81 Bulletin 81/1

(84) Etats Contractants Désignés: AT BE CH DE FR GB IT LI LU NL SE

(71) Demandeur: RHONE-POULENC INDUSTRIES
22, avenue Montaigne
F-75008 Paris(FR)

(72) Inventeur: Gay, Michel
11, rue Garibaldi
F-69006 Lyon(FR)

(74) Mandataire: Rioufrays, Roger et al,
RHONE-POULENC INDUSTRIES Centre de Recherches des Carrières Service Brevets
F-69190 Saint-Fons(FR)

(54) **Compositions stabilisantes pour polymères à base de chlorure de polyvinyle, procédé de stabilisation desdits polymères et polymères ainsi stabilisés.**

(57) L'invention concerne des compositions stabilisantes pour polymères à base de chlorure de polyvinyle qui comprennent :

- a) au moins un dérivé organique du zinc,
- b) au moins un dérivé organique d'un métal du groupe 2a de la classification périodique,
- c) au moins un polyol,
- d) au moins un ester de l'acide thioglycolique.

Elle concerne également un procédé de stabilisation de polymères à base de chlorure de polyvinyle par de telles compositions stabilisantes ainsi que les polymères stabilisés obtenus.

A partir des polymères ainsi stabilisés on obtient des objets conformés incolores et transparents.

EP 0 022 047 A1

# COMPOSITIONS STABILISANTES POUR POLYMERES A BASE DE CHLORURE DE POLYVINYLE, PROCEDE DE STABILISATION DESDITS POLYMERES ET POLYMERES AINSI STABILISES

La présente invention concerne des compositions stabilisantes pour polymères à base de chlorure de polyvinyle, un procédé de stabilisation desdits polymères ainsi que les polymères stabilisés à l'aide desdites compositions.

Les polymères de chlorure de vinyle doivent être mis en oeuvre à une température de l'ordre de 160 à 180 °C et même à des températures supérieures de l'ordre de 190 °C si l'on veut accélérer les cadences de production.

De très nombreux documents se rapportent à l'emploi de dérivés soufrés pour cette stabilisation thermique. La majorité de ces documents concerne des composés "thioétain" qui, outre leur toxicité plus ou moins grande, peuvent présenter un certain nombre d'inconvénients.

Une référence récente a même mis en valeur leur rôle éventuellement déstabilisant du PVC, des composés thiols pouvant être générés par décomposition des composés "thioétain" (W.H. STARNES Polymer Preprints vol.19 n° 1 page 623 de Mars 1978).

L'emploi de thiols et thioglycolates comme stabilisants du PVC a fait l'objet de divers brevets que l'on peut classer en quatre familles.:

1°) - Emploi de mercaptopropionates seuls (demande de brevet japonais KOKAI 76 11 77 41) ou en présence de dérivés terpéniques insaturés (brevet américain n° 3 242 133). L'effet de stabilisation thermique est réel mais insuffisant.

2°) - Traitement du PVC par un thioglycolate en milieu solvant à 80 °C pendant trois heures, puis utilisation du PVC traité en présence de sels métalliques (demande de brevet japonais KOKAI 77 13 91 59). Le gain sur la durée de stabilisation est faible puisqu'au test indiqué on passe de 75 minutes à 90 minutes, sans indication d'une amélioration importante de la coloration initiale.

3°) - Emploi de thiols ou de mercaptocarboxylates (mercaptopropionate ou thioglycolate) en présence d'un stabilisant

BAD ORIGINAL

primaire organoétain (brevet américain n° 3 928 285, brevet britannique n° 1 349 913, demande de brevet allemand n° 2 149 323, brevet américain n° 4 021 407, demande de brevet japonais KOKAI 73 26 839). Outre le fait que l'emploi de composés "organoétain" est de plus en plus restreint à cause de la toxicité de ces produits, les résultats obtenus ne sont pas satisfaisants. L'emploi de l'association de ces deux types de produits est moins efficace que l'emploi des mercaptides d'étain correspondants (voir Polymer Letters Vol. 9, pages 373 1971 - Edition J. Wiley and Sons).

4°) - Emploi de mercaptides métalliques. Les mercaptides autres que ceux décrivant des composés organostanniques ne présentent pas d'efficacité notable.

YOSHIRO NAKAMURA a décrit dans plusieurs brevets et publications l'action stabilisante obtenue par emploi de sels de calcium et de zinc et d'amino-2 dimercapto-4,6 S-triazine - demandes de brevet japonais KOKAI 78 00 245 - 77 139 160 - Journal of Macromolecule Sciences Chem. A 12 (2) pages 323-326 (1979) -.

Les résultats obtenus avec un tel système stabilisant sont très inférieurs à ceux obtenus avec le système stabilisant selon la présente invention.

Le brevet britannique 1 001 344 revendique des compositions à base de PVC contenant :

- a) un ou plusieurs composés organométalliques de lithium, sodium, potassium, magnésium, calcium, zinc, strontium, cadmium, baryum, aluminium, étain ou plomb,

- b) un composé organique ou organométallique du soufre, ayant un point d'ébullition sous pression atmosphérique qui ne soit pas inférieur à 200 °C, qui peut être un sulfure d'alkyle ou d'aryle, un acide mercapto carboxylique ou un ester de ces acides,

- c) un antioxydant organique qui inhibe les réactions en chaîne de décomposition du PVC, qui est notamment un dérivé substitué du phénol.

De telles compositions conduisent à des objets qui sont néanmoins faiblement colorés.

Il a maintenant été trouvé de manière inattendue qu'il existe un effet de synergie remarquable entre des dérivés organiques du zinc, des

dérivés organiques des métaux du groupe 2a de la classification périodique des éléments, des polyols et les esters de l'acide thioglycolique, en ce qui concerne la stabilisation thermique des polymères à base de chlorure de polyvinyle ; cela permet d'obtenir des objets incolores ayant une très bonne tenue thermique.

Dans la description qui suivra on appellera radical alkyle inférieur un radical alkyle ayant 1 à 4 atomes de carbone et radical alkoxy inférieur un radical alkoxy ayant 1 à 4 atomes de carbone.

Plus précisément l'invention consiste tout d'abord en des compositions thermostabilisantes pour polymères à base de chlorure de polyvinyle, caractérisées en ce qu'elles contiennent :

- a) au moins un dérivé organique du zinc,
- b) au moins un dérivé organique d'un métal du groupe 2a de la classification périodique des éléments,
- c) au moins un polyol,
- d) au moins un ester thioglycolique de formule générale :

$$(HS - CH_2 - COO \rlap{)}_{n} R \qquad (I)$$

dans laquelle :

- n est un nombre entier égal à 1, 2, 3 ou 4,
- R représente un radical monovalent ou polyvalent qui peut être :

. un radical aliphatique linéaire ou ramifié, saturé ou comportant une ou plusieurs insaturations éthyléniques, et pouvant comprendre un ou plusieurs des enchaînements - O - , - S -,

. un radical cycloaliphatique, éventuellement porteur de 1 ou plusieurs substituants alkyles ou alkoxy, et pouvant comporter une ou plusieurs insaturations éthyléniques,

. un radical aryle ou arylaliphatique, la partie cyclique portant éventuellement un ou plusieurs substituants alkyles ou alkoxy et pouvant être liée à la partie aliphatique par un atome d'oxygène - O -,

. un radical trisalkylèneisocyanurate,

. un radical $- R_1 - COO - R_2 -$, lorsque n = 2, $R_1$ et $R_2$ étant des radicaux aliphatiques linéaires ou ramifiés, saturés ou comportant une ou plusieurs insaturations éthyléniques,

. un enchaînement de plusieurs des radicaux précédemment

cités.

Par dérivé organique de zinc de même que par dérivé organique d'un métal du groupe 2a, on entend : des sels dont l'anion provient principalement d'acides monocarboxyliques ou dicarboxyliques aliphatiques ayant de 2 à 24 atomes de carbone, saturés ou non, substitués ou non, ou d'acides monocarboxyliques aromatiques ou alicycliques substitués ou non. Parmi les anions les plus couramment utilisés, on peut citer ceux qui dérivent des acides maléique, acétique, diacétique, propionique, hexanoïque, éthyl-2 hexanoïque, octanoïque, décanoïque, undécanoïque, laurique, myristique, palmitique, stéarique, oléique, ricinoléique, béhénique, hydroxystéarique, hydroxyundécanoïque, benzoïque, phénylacétique, alkylbenzoïque, paratertiobutylbenzoïque, salicylique ; des dérivés métalliques de composés phénoliques substitués ou non, tels que le phénol ou les phénols substitués par un radical alkyle ayant de préférence de 4 à 24 atomes de carbone ; des mercaptides par exemple le zinciosulfuro-2 acétate d'isooctyle ; des chélates de composés ß-dicarbonylés.

Pour des raisons pratiques ou pour des raisons économiques, on choisit de préférence, parmi les dérivés organométalliques cités précédemment, ceux qui dérivent des acides carboxyliques ou des composés phénoliques.

Ainsi on utilise fréquemment comme composé a) les sels de zinc des acides propionique, octanoïque, laurique, stéarique, oléique, ricinoléique, benzoïque, paratertiobutylbenzoïque, salicylique et du maléate de monoéthyl-2 hexyle ; comme composé b) on utilise fréquemment les sels de calcium, de magnésium, de baryum ou de strontium des acides propionique, octanoïque, laurique, stéarique, oléique, ricinoléique, benzoïque, paratertiobutylbenzoïque, salicylique et du maléate de monoéthyl-2 hexyle.

Des taux de 0,005 à 1 % en poids par rapport au polymère à stabiliser et de préférence de 0,01 à 0,6 % conduisent à de très bons résultats.

Parmi les dérivés mentionnés en (b), et dont les plus utilisés sont les dérivés du calcium, du baryum, du strontium ou du magnésium, on préférera les dérivés du calcium et les dérivés du magnésium, surtout

ceux du calcium qui conduisent à de très bons résultats. Ces dérivés sont couramment utilisés en mélanges par exemple Ca et Ba ou Ca et Mg. Pour des raisons d'efficacité on préfère le mélange Ca-Mg. Des taux de 0,01 à 5 % en poids par rapport au polymère à stabiliser et de préférence de 0,03 à 1 % permettent en addition avec les autres stabilisants revendiqués l'obtention de bons résultats.

Les polyols conviennent pour allonger l'effet stabilisant des composés métalliques ou organiques selon l'invention. Un compromis doit toutefois être trouvé car ces produits ont tendance à colorer les compositions. Pour des problèmes de mise en oeuvre à température élevée des polymères à base de chlorure de polyvinyle, il est préférable que les polyols entrant dans les compositions stabilisantes de l'invention aient un point d'ébullition supérieur à 150 °C et le plus souvent supérieur à 170 °C.

A titre d'exemples de tels polyols on peut citer des triols comme le triméthylolpropane, le glycérol, l'hexane triol-1,2,6, le butane triol-1,2-4 et le trishydroxyéthylisocyanurate, des tétrols comme le pentaérythrol, le diglycérol, des pentitols comme le xylitol, des héxitols comme le sorbitol, le mannitol et le dipentaérythrol, des polyols à huit groupes hydroxyle comme le tripentaérythrol.et des polymères à groupes hydroxyle libres comme les alcools polyvinyliques, notamment ceux dans lesquels il reste moins de 30 % en moles de groupes esters par rapport à l'ensemble des groupes hydroxyle et esters et qui présentent une viscosité à 20 °C en solution aqueuse à 4 % en poids comprise entre environ 4 Pascal.seconde et 60 Pascal.seconde.

En général on utilise de 0,005 % à 1 % en poids de polyol par rapport au polymère à stabiliser et de préférence de 0,01 % à 0,6 %.

Il a été trouvé que les polyols ayant plus de quatre groupes hydroxyle dans leur molécule donnent des résultats particulièrement satisfaisants.

Ainsi des polyols comme le sorbitol, le mannitol et le xylitol sont particulièrement efficaces dans les compositions selon l'invention et cela même utilisés à de faibles doses. Ainsi, bien que ces composés soient employés à des doses situées de préférence entre 0,01 % et 0,25 % en poids, par rapport au polymère, l'effet de stabilisation des

compositions les contenant est déjà net, et on n'observe pas d'effet parasite de coloration, à des teneurs aussi faibles que 0,005 % à 0,01 % en poids par rapport au polymère.

Parmi les esters thioglycoliques de formule (I) mentionnés en d) on utilise habituellement ceux dans la formule desquels n est un nombre entier égal à 1, 2 ou 3 et R représente un radical monovalent ou polyvalent tel que :

- un radical aliphatique linéaire ou ramifié, saturé ou comportant une ou plusieurs insaturations éthyléniques ayant de 2 à 36 atomes de carbone et pouvant comprendre un ou plusieurs enchaînements - O - ou - S -,

- un radical cycloaliphatique ayant de 5 à 12 atomes de carbone éventuellement substitué par un ou plusieurs radicaux alkyles inférieurs ou alkoxy inférieurs,

- un radical cycloalkylaliphatique ou cycloalkènylaliphatique ayant 6 à 16 atomes de carbone dont le cycle est éventuellement substitué par un ou plusieurs radicaux alkyles ou alkoxy inférieurs et dont la partie aliphatique comprend de 1 à 6 atomes de carbone et peut être liée au cycle par un atome d'oxygène - O -,-

-un radical aryle ou arylaliphatique, dont le cycle est éventuellement substitué par un ou plusieurs radicaux alkyles ou alkoxy inférieurs et dont l'éventuelle partie aliphatique comprend de 1 à 6 atomes de carbone et peut être liée au cycle par un atome d'oxygène - O -,

- un radical trisalkylèneisocyanurate, les restes alkylènes ayant de 1 à 4 atomes de carbone,

- un radical $-R_1 - COO - R_2 -$, $R_1$ et $R_2$, identiques ou différents, étant des radicaux aliphatiques linéaires ou ramifiés, saturés ou comportant une ou plusieurs insaturations éthyléniques et ayant de 1 à 18 atomes de carbone,

- un enchaînement de plusieurs des radicaux précédemment cités.

Toujours pour des problèmes de mise en oeuvre à température élevée des polymères à base de chlorure de polyvinyle, il est préférable que les esters thioglycoliques entrant dans les compositions stabilisantes de l'invention aient un point d'ébullition supérieur à

150 °C et le plus souvent supérieur à 170 °C

Les esters thioglycoliques de formule (I) sont facilement obtenus par estérification de l'acide thioglycolique avec divers composés mono ou polyhydroxylés. Parmi ces derniers on indiquera plus particulièrement les suivants :

- 1°) Si n = 1, R dérive d'un monoalcool R-OH :

- R peut être un radical alkyle ou alkényle linéaire ou ramifié ayant de préférence de 6 à 36 atomes de carbone.

On partira alors d'alcools linéaires ou non tels que par exemple les alcools isooctylique, dodécylique octadécylique, stéarique, undécylique ou de mélanges d'alcools en $C_{11}$ - $C_{15}$ (tels que ceux commercialisés sous la marque SYNPROL).

- R peut être un radical phényle ou phénylalkyle ou cyclohexyle ou cyclohexylalkyle, dont le cycle est éventuellement substitué par un ou plusieurs radicaux alkyles ou alkoxy inférieurs et dont l'éventuelle partie aliphatique comprend de 1 à 6 atomes de carbone et peut être liée au cycle par un atome d'oxygène - O -.

On partira alors par exemple du cyclohexanol, de l'alcool benzylique substitué ou non, du nonylphénol, des alcools phénéthyliques, de l'alcool ß-phénoxyéthylique ou de l'alcool anisique.

- R peut être un enchaînement de plusieurs des radicaux précédents.

- 2°) Si n = 2, R dérivé d'un diol $R(OH)_2$ :

- R peut être un radical alkylène linéaire ou ramifié ayant de 2 à 24 atomes de carbone.

On partira alors de diols tels que l'éthylèneglycol, le propanediol-1,2, le propanediol-1,3, le butanediol-1,2, le butanediol-1,3, le butanediol-1,4, le butanediol-2,3, le pentanediol-1,5, l'hexanediol-1,6, le triméthyl-2,2,4 pentanediol-1,3 ou les diols de formule :

$$HO - CH_2 - \overset{\displaystyle R'}{\overset{|}{\underset{\underset{\displaystyle R''}{|}}{C}}} - CH_2 - OH$$

dans lesquels R' et R" identiques ou différents représentent des radicaux alkyles inférieurs, tels que par exemple le néopentylglycol.

- R peut être un radical $- R_1 - COO - R_2 -$, $R_1$ et $R_2$ ayant les significations indiquées précédemment.

On peut alors partir de certains esters de polyols comme par exemple l'hydroxypivalate de néopentylglycol ou le monostéarate de glycéryle.

- R peut être aussi un radical cyclohexylène, ou un radical cyclohexylènealkyle ou un radical cyclohexylènedialkyle dont le cycle est éventuellement substitué par un ou plusieurs radicaux alkyles ou alkoxy inférieurs et dont les éventuelles parties aliphatiques comprennent de 1 à 6 atomes de carbone et peuvent être liées au cycle par un atome d'oxygène - O -.

On peut alors partir de composés dihydroxylés comme le bis(hydroxyméthyl)-1,2 cyclohexane, le bis(hydroxyméthyl)-1,3 cyclohexane, le bis(hydroxyméthyl)-1,4 cyclohexane, le dihydroxy-1,4 cyclohexane.

- R peut aussi être un radical phénylène ou phénylènealkyle ou phénylènedialkyle, dont le cycle est éventuellement substitué par un ou plusieurs radicaux alkyle ou alkoxy inférieurs et dont les éventuelles parties aliphatiques comprennent de 1 à 6 atomes de carbone et peuvent être liées au cycle par un atome d'oxygène - O -.

On peut alors partir par exemple de bis(hydroxyméthyl)-1,4 benzène.

- R peut aussi être un enchaînement de plusieurs des radicaux précédents.

On peut alors partir par exemple de bisphénol A hydrogéné ou de bis(hydroxy-2 propoxy)-4,4' diphényl-2,2 propane (BHPDP) ou de bis(hydroxy-2 éthoxy)-4,4' diphényl-2,2 propane (BHEDP). On peut

également utiliser comme composés dihydroxylés servant à préparer des esters divalents de l'acide thioglycolique des polyéthers à fonctions hydroxyle terminales, comme les polyéthylèneglycols ou les polypropylèneglycols, ayant une basse masse moléculaire.ou des polyesters linéaires à fonctions hydroxyle terminales ayant une basse masse moléculaire.

- 3°) Si n est supérieur à 2 :

- R peut être un radical aliphatique trivalent linéaire ou ramifié ayant de 3 à 24 atomes de carbone.

On peut partir de triols simples comme par exemple l'hexanetriol-1,2,6 ou le butanetriol-1,2,4 ou le triméthylolpropane ou le glycérol. On peut aussi partir de tétrols comme le pentaérythrol ou d'hexitols comme le sorbitol dont éventuellement 1, 2, 3 fonctions peuvent être estérifiées.

- R peut être un radical trisalkylèneisocyanurate dans lequel les restes alkylènes ont de 1 à 4 atomes de carbone.

on peut partir par exemple du trishydroxyéthylisocyanurate (THEIC).

Parmi les esters thioglycoliques on préférera d'une façon générale les composés dans lesquels n égale 2 qui globalement conduisent aux meilleurs résultats ; ceux dans lesquels n égale 1 donnent aussi de bons résultats, supérieurs en tout état de cause aux composés où n est supérieur à 2 particulièrement dans les compositions plastifiées.

Parmi les composés qui s'appliquent bien à la mise en oeuvre de l'invention, on peut citer notamment : le thioglycolate de propanediol-1,2, le thioglycolate de propanediol-1,3, le thioglycolate de butanediol-1,2, le thioglycolate de butanediol-1,3, le thioglycolate de butanediol-1,4, le thioglycolate d'hexanediol-1,6, les thioglycolates d'isooctyle ou de lauryle ou de cétyle ou d'octadécyle, le thioglycolate de méthyl-2 propyl-2 propanediol-1,3, le thioglycolate d'éthylèneglycol, le thioglycolate de néopentylglycol, le thioglycolate de triméthyl-2,2,4 pentanediol-1,3, le thioglycolate de triméthyl-1,2,6 hexanediol, le thioglycolate de triméthylol propane, le thioglycolate d'hexanetriol-1,2,6, le thioglycolate de benzyle, le thioglycolate de bisphénol-A hydrogéné, le thioglycolate de bis(hydroxyméthyl)-1,4

cyclohexane, le tristhioglycolate de triméthylol éthane ou de triméthylol propane, le tétrakisthioglycolate de pentaérythryle, le monothioglycolate de glycérylmonoricinoléate, le thioglycolate de trishydroxyéthylisocyanurate, le thioglycolate d'hydroxypivalate de néopentylglycol.

Ces esters thioglycoliques sont utilisés dans des proportions qui varient beaucoup selon leur poids moléculaire, mais qui sont généralement comprises entre 0,005 et 5 % et de préférence 0,05 à 1 % en poids par rapport au polymère.

D'une manière générale on peut indiquer que la proportion pondérale de chacun des constituants des compositions selon l'invention sera d'autant plus élevée dans les compositions polymériques à stabiliser que celles-ci seront plus rigides, c'est-à-dire contiendront moins de plastifiant.

Dans l'intervalle des différentes proportions données pour chacun des constituants a), b), c) et d) des compositions stabilisantes de l'invention, il est bien entendu que l'homme de métier pourra être amené à adapter les rapports relatifs de ces différents constituants, afin d'obtenir telle ou telle formulation plus particulièrement destinée à fournir le résultat désiré.

L'invention consiste également en un procédé de stabilisation de polymères à base de chlorure de polyvinyle caractérisé par l'emploi conjoint des constituants des compositions stabilisantes décrites précédemment.

Enfin l'invention consiste aussi dans les compositions à base de chlorure de polyvinyle stabilisées par l'incorporation des compositions stabilisantes décrites précédemment.

Par composition à base de chlorure de polyvinyle, on entend des compositions contenant un homopolymère du chlorure de vinyle ou de vinylidène, un copolymère de chlorure de vinyle avec divers autres monomères ou un mélange de polymère ou copolymère dont une partie majoritaire est obtenue à partir de chlorure de vinyle.

En général tout type d'homopolymère de chlorure de vinyle peut convenir quel que soit son mode de préparation : polymérisation en masse, en suspension, en dispersion ou de tout autre type et quelle que soit sa

viscosité intrinsèque. Ces homopolymères peuvent aussi être modifiés chimiquement comme par exemple les polymères de chlorure de vinyle chlorés. Les compositions stabilisantes de l'invention sont tout particulièrement efficaces lorsqu'elles sont utilisées avec un polymère à base de PVC obtenu par polymérisation en masse.

De nombreux copolymères de chlorure de vinyle peuvent également être stabilisés contre les effets de la chaleur : jaunissement et dégradation. Ils comprennent des copolymères obtenus par copolymérisation du chlorure de vinyle avec d'autres monomères présentant une liaision éthylénique polymérisable, comme par exemple les esters vinyliques : acétate de vinyle, chlorure de vinylidène ; les acides (ou leurs esters) maléique ou fumarique ; les oléfines : éthylène - propylène - hexène ; les esters acryliques ; le styrène ; ou les éthers vinyliques : n-vinyldodécyléther.

Ces copolymères contiennent habituellement au moins 50 % en poids de chlorure de vinyle. Toutefois l'invention s'applique particulièrement bien aux copolymères contenant au moins 80 % en poids de chlorure de vinyle.

L'invention s'applique bien aussi aux mélanges de polymères comprenant des quantités minoritaires d'autres polymères comme les polyoléfines halogénées ou les copolymères acrylonitrile - butadiène - styrène ou aux mélanges d'homopolymères ou de copolymères tels que définis plus haut.

Ces compositions peuvent être soit "rigides" soit "flexibles". Lorsqu'on utilise des compositions "rigides" elles peuvent comporter alors des modificateurs de résistance au choc, des pigments et/ou des charges, des lubrifiants aidant à leur mise en oeuvre, en plus du polymère et des divers stabilisants ou adjuvants.

Lorsqu'on utilise des compositions "flexibles", elles peuvent comprendre des plastifiants primaires ou secondaires, des pigments et/ou des charges, des lubrifiants etc ... en plus du polymère et des divers stabilisants ou adjuvants. Ces stabilisants sont essentiellement des antioxydants, des stabilisants "lumière" ou UV ainsi que d'autres composés connus pour leur effet sur la stabilisation thermique comme par exemple les époxydes, les phosphites, les composés phénoliques.

Ces époxydes sont généralement des composés complexes, habituellement des polyglycérides époxydés comme l'huile de soja époxydée, les huiles de lin ou de poisson époxydées, la talloil époxydée, ou des esters époxydés d'acides gras, ou des hydrocarbures époxydés comme le polybutadiène époxydé, ou des éthers époxydés.

Divers phosphites d'alkyle ou d'aryle sont aussi connus pour leur activité stabilisante comme par exemple le phosphite de phényle et d'éthyl-2 hexyle, le phosphite de triisodécyle ou le diphosphite de diisooctyle et de pentaérythryle.

Des composés phénoliques ont aussi été utilisés comme stabilisants thermiques : il s'agit principalement de l'hydroxytoluène butylé (BHT) et d'autres phénols substitués.

Il va de soi que l'on ne sort pas de l'invention en ajoutant aux stabilisants revendiqués de petites quantités de stabilisants additionnels maintenant bien connus de l'homme de l'art, comme par exemple des composés ß-dicétoniques ou des composés organiques azotés tels que les esters de l'acide ß-aminocrotonique ou les dérivés de l'α-phénylindole ou les dérivés des dihydropyridines substituées.

Les quatre stabilisants des compositions selon l'invention peuvent être incorporés en même temps que les autres adjuvants. Ils peuvent aussi être mélangés entre eux ou avec certains des adjuvants. La composition stabilisante sera alors ultérieurement incorporée au polymère. Toutes les méthodes usuelles connues dans ce domaine peuvent convenir pour réaliser le mélange des ingrédients. Toutefois l'homogénéisation de la composition finale peut avantageusement être faite sur malaxeur ou mélangeur à rouleaux à une température telle que la composition devienne fluide, normalement entre 150 et 170 °C pour le PVC et pendant une durée suffisante pour une bonne homogénéisation, soit environ de 3 à 20 minutes.

Les compositions stabilisées à base de chlorure de polyvinyle selon l'invention peuvent être mises en oeuvre selon toutes les techniques habituellement utilisées pour travailler les compositions de PVC et de ses copolymères par exemple : injection ; extrusion ; extrusion soufflage ; calandrage ; moulage par rotation.

Les compositions stabilisantes selon l'invention permettent de

retarder considérablement, sinon de supprimer, l'apparition du jaunissement pendant la période où la composition à base de chlorure de polyvinyle mise en oeuvre est chauffée à 180 °C et plus, et d'obtenir des produits finis transparents, incolores, homogènes et ne présentant pas d'exsudation.

Dans les exemples suivants, on prépare les compositions en plaçant les divers constituants sous forme de poudre ou éventuellement de liquide dans un broyeur à billes, que l'on fait tourner sur rouleaux pendant le temps nécessaire à une bonne homogénéisation, généralement au moins cinq minutes.

Puis à partir de ces compositions homogènes, on prépare au moyen d'un calandrage à une température de 150 à 180 °C pendant trois minutes des plaques de 1 mm d'épaisseur dans lesquelles on découpe des éprouvettes rectangulaires d'environ 1 x 2 cm que l'on place en étuve ventilée à 175 °C, 180 °C ou 190 °C pendant des durées variables.

On détermine alors la coloration des échantillons par comparaison avec un disque Lovibond selon l'échelle GARDNER.

EXEMPLE 1 :

Ces premiers essais ont pour but de mettre en évidence l'effet synergétique des différents constituants des compositions stabilisantes selon l'invention.

On prépare la composition de base A) suivante :

- 654 g de PVC en poudre, caractérisé par un indice de viscosité de 95 selon la norme NF T 51 013, obtenu par polymérisation en masse et vendu sous la dénomination commerciale LUCOVYL GB 9550,
- 326 g de phtalate de dioctyle,
- 10 g d'huile de soja époxydée.

A différentes fractions de 100 g de cette composition A) on ajoûte respectivement l'un des stabilisants indiqués dans le tableau I ci-après. Avec chacune des compositions ainsi obtenues on prépare des feuilles de un millimètre d'épaisseur par calandrage de 8 minutes à 150 °C. On effectue un vieillissement thermique en étuve à 180 °C et la coloration est suivie selon l'échelle GARDNER. Les résultats sont rassemblés dans le tableau I. Seul l'exemple 1 est effectué avec une composition stabilisante selon l'invention.

(Dans tous les tableaux qui suivent, on abrégera thioglycolate en TG).

TABLEAU I

| Exemple et essais comparatifs | Stabilisants : (poids en grammes) / Temps en minutes | | 0 | 7 | 14 | 21 | 30 | 40 | 50 | 60 | 70 | |
|---|---|---|---|---|---|---|---|---|---|---|---|---|
| 1 | Stéarate de zinc<br>Stéarate de calcim<br>Sorbitol<br>TG de bisphénol A hydrogéné | 0,07<br>0,12<br>0,03<br>0,28 | 0 | 0 | 0 | 0 | 0 | 0 | 0 | 0 | 1 | brun à 85 mn |
| 1a | TG de bisphénol A hydrogéné | 0,28 | 0 | 0,5 | 1 | 3 | 5 | 7 | brun | | | |
| 1b | TG de bisphénol A hydrogéné<br>Stéarate de calcium | 0,28<br>0,12 | 0 | 0 | 0,5 | 3 | 5 | 6 | brun | | | |
| 1c | Stéarate de zinc<br>Stéarate de calcium | 0,07<br>0,12 | 0 | 1 | 3 | bords noirs | noir | | | | | |
| 1d | Stéarate de zinc<br>Stéarate de calcium<br>Sorbitol | 0,07<br>0,12<br>0,03 | 2 | 6 | 7 | 7 | 8 | 8 | brun | noir | | |
| 1e | Stéarate de zinc<br>Stéarate de calcium<br>TG de bisphénol A hydrogéné | 0,07<br>0,12,<br>0,28 | 0 | 0 | 1 | 2 | 3 | bords noirs | noir | | | |

EXEMPLE 2 :

Ces essais ont également pour but de montrer l'effet synergétique des constituants des compositions stabilisantes selon l'invention.

On prépare la composition de base B) suivante :

- 665 g du même PVC que dans l'exemple 1,
- 320 g de phtalate de dioctyle,
- 8,6 g d'huile de soja époxydée,
- 1,7 g de phosphite de trinonylphényle.

A trois fractions de 100 g chacune de la composition B) on ajoute respectivement l'une des trois séries de stabilisants indiquées dans le tableau II ci-après. On effectue pour chaque composition stabilisée obtenue un calandrage de 4 minutes à 160 °C afin de préparer des feuilles de un millimètre d'épaisseur. On effectue le test de vieillissement thermique à 180 °C comme pour l'exemple 1. Les indices de coloration GARDNER mesurés sont rassemblés dans le tableau II.

(Seul l'exemple 2 est effectué avec une composition stabilisante selon l'invention).

TABLEAU II

| Exemple et essais compa-ratifs | Stabilisants (poids en grammes) \ Temps en minutes | 0 | 7 | 14 | 21 | 30 | 40 | 50 | 60 | |
|---|---|---|---|---|---|---|---|---|---|---|
| 2 | Stéarate de zinc 0,12<br>Stéarate de calcium 0,24<br>Sorbitol 0,05<br>TG de bisphénol A hydrogéné 0,17 | 0 | 0 | 0 | 0 | 0 | 0 | 1 | 3 | noir à 80 mn |
| 2a | TG de bisphénol A hydrogéné 0,17 | 1,5 (nuance rosée) | 4 | 5 | 11 | 12 | 13 | 14 | brun | |
| 2b | Stéarate de zinc 0,12<br>Stéarate de calcium 0,24<br>Sorbitol 0,05 | 1,5 | 5 | 6 | 7 | 7 | 7 | bords noirs | noir | |

EXEMPLES 3 à 20 :

On prépare la composition de base C) suivante :

- 1 308 g du même PVC que dans l'exemple 1,
- 652 g de phtalate de dioctyle,
- 20 g d'huile de soja époxydée,
- 1,4 g de stéarate de zinc,
- 2,4 g de stéarate de calcium,
- 0,4 g de sorbitol.

A différentes fractions de 100 g de la composition C), on ajoute l'un des différents stabilisants indiqués dans le tableau III ci-après.

On obtient après homogénéisation de nouveaux mélanges avec lesquels on prépare des feuilles de un millimètre d'épaisseur par calandrage à 150 °C pendant 8 minutes.

On effectue le test de vieillissement thermique à 180 °C comme pour l'exemple 1. Les indices de coloration GARDNER mesurés sont rassemblés dans le tableau III.

TABLEAU III

| Exemples | Stabilisants (poids en grammes) \ Temps en minutes | | 0 | 7 | 14 | 21 | 30 | 40 | 50 | |
|---|---|---|---|---|---|---|---|---|---|---|
| | Composition C seule | | 0,5 | 3 | 4 | 5 | 5 | 7 | noir | |
| 3 | TG de néopentylglycol | 0,28 | 0 | 0 | 0 | 0 | 0 | 0,5 | 0,5 | bords noirs à 70 mn |
| 4 | TG de lauryle | 0,56 | 0 | 0 | 0 | 0 | 0 | 0,5 | bords noirs | noir à 53 mn |
| 5 | TG de Synprol | 0,40 | 0 | 0 | 0 | 0 | 0 | 0,5 | 3 | noir à 62 mn |
| 6 | TG de butanediol-1,3 | 0,28 | 0 | 0 | 0 | 1 | 2 | 2 | 2 | bords noirs à 80 mn |

**TABLEAU III (suite)**

| | | | | | | | | | | |
|---|---|---|---|---|---|---|---|---|---|---|
| 7 | TG d'hexanediol-1,6 | 0,28 | 0 | 0 | 0 | 0 | 2 | 3 | 3 | 4 -80mn |
| 8 | TG de méthyl-2 propyl-2 propanediol-1,3 | 0,28 | 0 | 0 | 0 | 0 | 0 | 0,5 | 0,5 | bords noirs à 70 mn |
| 9 | TG d'hydroxypivalate de néopentylglycol | 0,28 | 0 | 0 | 0 | 0 | 0 | 0,5 | 3 | noir à 70 mn |
| 10 | TG d'hydroxypivalate de néopentylglycol | 0,40 | 0 | 0 | 0 | 0 | 0 | 0 | 0,5 | 3 à 70 mn |
| 11 | TG d'hydroxypivalate de néopentylglycol + sorbitol | 0,40<br>0,01 | 0 | 0 | 0 | 0 | 0 | 0 | 0 | 1 à 70 mn |
| 12 | TG de triméthyl-2,2,4 pentanediol-1,3 | 0,28 | 0 | 0 | 0 | 0 | 0 | 1 | 3 | bords noirs à 70 mn |
| 13 | TG de bisphénol A hydrogéné | 0,28 | 0 | 0 | 0 | 0 | 0 | 1 | 2 | bords noirs à 70 mn |

TABLEAU III (suite)

| | | | | | | | | | | |
|---|---|---|---|---|---|---|---|---|---|---|
| 14 | TG de bisphénol A hydrogéné<br>sorbitol | 0,28<br>0,01 | 0 | 0 | 0 | 0 | 0 | 0,5 | 1 | 2 à<br>70 mn |
| 15 | TG de bisphénol A hydrogéné<br>sorbitol | 0,44<br>0,01 | 0 | 0 | 0 | 0 | 0 | 0 | 0 | 1 à<br>70 mn |
| 16 | TG de bis(hydroxyméthyl)-1,4<br>cyclohexane | 0,28 | 0 | 0 | 0 | 0 | 0 | 0 | 0 | 1 à<br>70 mn |
| 17 | TG de bis(hydroxyméthyl)-1,4<br>cyclohexane | 0,40 | 0 | 0 | 0 | 0 | 0 | 0 | 0 | 0,5 à<br>70 mn |
| 18 | TG de triméthyl-1,2,6<br>hexanediol technique | 0,28 | 0 | 0 | 0 | 0 | 0 | 0,5 | 2 | bords<br>noirs<br>à 70 mn |
| 19 | TG de BHEDP | 0,40 | 0 | 0 | 0 | 0 | 0 | 0 | 0,5 | bords<br>noirs<br>à 70 mn |
| 20 | TG de BHPDP | 0,40 | 0 | 0 | 0 | 0 | 0 | 0 | 3 | noir à<br>64 mn |

BHEDP = bis(hydroxy-2 éthoxy)-4,4' diphényl-2,2 propane
BHPDP = bis(hydroxy-2 propoxy)-4,4' diphényl-2,2 propane

EXEMPLES 21 à 24 :

On prépare la composition de base D) suivante :

- 654 g du même PVC que dans l'exemple 1,
- 326 g de phtalate de dioctyle,
- 10 g d'huile de soja époxydée,
- 0,7 g de stéarate de zinc,
- 1,2 g de stéarate de calcium,
- 0,1 g de sorbitol.

A quatre fractions de 100 g de la composition D) on ajoute respectivement l'un des quatre stabilisants indiqués dans le tableau IV ci-après.

Avec les quatre compositions stabilisées obtenues, on prépare par calandrage pendant 8 minutes à 150 °C des feuilles de un millimètre d'épaisseur.

On effectue le test de vieillissement thermique à 180 °C comme pour l'exemple 1. Les indices de coloration GARDNER mesurés sont rassemblés dans le tableau IV.

TABLEAU IV

| Exemples | Stabilisants (poids en grammes) \ Temps en minutes | | 0 | 7 | 14 | 21 | 30 | 40 | 50 | 70 |
|---|---|---|---|---|---|---|---|---|---|---|
| 21 | TG d'hexanetriol-1,2,6 | 0,4 | 0 | 0 | 0 | 1 | 1 | 1 | 2 | 3 |
| 22 | TG de butanetriol-1,2,4 | 0,4 | 0 | 0 | 0 | 0 | 0 | 0 | 1 | 1 |
| 23 | TG de trishydroxyéthyl isocyanurate | 0,4 | 0 | 0 | 0 | 1 | 1 | 2 | 3 | 4 |
| 24 | TG de triméthylolpropane | 0,4 | 0 | 0 | 0 | 0 | 0 | 0 | 1 | 1 |

EXEMPLES 25 à 29 :

Dans ces exemples, on fait varier l'anion du dérivé de calcium.

On prépare une composition E) constituée par :

- 654 g du même PVC que dans l'exemple 1,
- 326 g de phtalate de dioctyle,
- 10 g d'huile de soja époxydée,
- 3,2 g de thioglycolate de bis(hydroxy-2 éthoxy)-4,4' diphényl-2,2 propane (BHEDP)
- 0,2 g de sorbitol.
- 0,7 g de stéarate de zinc,

A 100 g de la composition E) on ajoute divers sels de calcium. On effectue le test de vieillissement thermique à 180 °C comme pour l'exemple I sur des échantillons d'épaisseur un millimètre préparés par calandrage à 150 °C pendant 8 minutes On obtient les indices GARDNER suivants (tableau V).

TABLEAU V

| Exemples | Sels de calcium (poids en grammes) | Temps en minutes | 0 | 7 | 14 | 21 | 30 | 40 | 55 | |
|---|---|---|---|---|---|---|---|---|---|---|
| 25 | Stéarate de calcium | 0,12 | 0 | 0 | 0 | 0 | 0 | 0 | 1 | bords noirs à 75 mn |
| 26 | Octanoate de calcium | 0,08 | 0 | 0 | 0 | 0 | 0 | 0 | 1 | noir à 75 mn |
| 27 | Paratertiobutylbenzoate de calcium | 0,09 | 0 | 0 | 0 | 0 | 0 | 0 | 1 | noir à 75 mn |
| 28 | Paratertiobutylbenzoate de calcium | 0,16 | 0 | 0 | 0 | 0 | 0 | 0 | 0,5 | 5 à 75 mn |
| 29 | Sel de calcium du maléate de mono éthyl-2 hexyle | 0,09 | 0 | 0 | 0 | 0,5 | 1 | 1 | 4 | brun à 65 mn |

EXEMPLES 30 à 33 :

On prépare la composition de base F) suivante :

- 654 g du même PVC que dans l'exemple 1,
- 326 g de phtalate de dioctyle,
- 10 g d'huile de soja époxydée,
- 2,8 g de thioglycolate de bis(hydroxyméthyl)-1,4 cyclohexane,
- 0,7 g de stéarate de zinc,
- 0,2 g de sorbitol.

A quatre fractions de 100 g de la composition F) on ajoute respectivement l'un des quatre sels de calcium indiqués dans le tableau VI ci-après.

Avec les compositions stabilisées obtenues on prépare par calandrage pendant 8 minutes à 150 °C des feuilles de un millimètre d'épaisseur.

On effectue le test de vieillissement thermique à 180 °C comme pour l'exemple 1. Les indices de coloration GARDNER mesurés sont rassemblés dans le tableau VI.

TABLEAU VI

| Exemples | Sels de calcium (poids en grammes) \ Temps en minutes | | 0 | 7 | 14 | 21 | 30 | 40 | 60 | |
|---|---|---|---|---|---|---|---|---|---|---|
| 30 | Stéarate de calcium | 0,12 | 0 | 0 | 0 | 0 | 0 | 0 | 0 | brun à 100 mn |
| 31 | Paratertiobutylbenzoate de calcium | 0,12 | 0 | 0 | 0 | 0 | 0 | 0 | 0 | brun à 100 mn |
| 32 | Salicylate de calcium | 0,08 | 0 | 0 | 0 | 0 | 0 | 0 | 0 | brun à 90 mn |
| 33 | Benzoate de calcium | 0,12 | 0 | 0 | 0 | 0 | 0 | 0 | 1 | brun à 70 mn |

EXEMPLE 34 :

A 100 g de la composition de base E) on ajoute 0,12 g de sel de magnésium du maléate de monoéthyl-2 hexyle. On effectue le test de vieillissement thermique à 180 °C sur des échantillons d'épaisseur un millimètre préparés par calandrage à 150 °C pendant 8 minutes. On obtient les indices GARDNER suivants (tableau VII):

TABLEAU VII

| Exemples | Sel de magnésium (poids en grammes) \ Temps en minute | 0 | 7 | 14 | 21 | 30 | 40 | 55 |
|---|---|---|---|---|---|---|---|---|
| 34 | Sel de magnésium du maléate de mono éthyl-2 hexyle 0,12 | 0 | 0 | 0 | 0,5 | 1 | 3 | brun |

EXEMPLES 35 à 37 :

On essaie d'autres sels de magnésium comme dérivé organique d'un métal du groupe 2a.

On prépare la composition de base G) suivante :

- 654 g du même PVC que dans l'exemple 1,
- 326 g de phtalate de dioctyle,
- 10 g d'huile de soja époxydée,
- 0,7 g de stéarate de zinc,
- 0,2 g de sorbitol,
- 2,8 g de thioglycolate de néopentylglycol.

A trois fractions de 100 g chacune de composition G) on ajoute respectivement l'un des différents sels de magnésium indiqués dans le tableau VIII ci-après.

Avec les compositions stabilisées ainsi obtenues on prépare par calandrage de 8 minutes à 150 °C des feuilles de un millimètre d'épaisseur. On effectue le test de vieillissement thermique à 180 °C.

Les indices de coloration GARDNER mesurés sont rassemblés dans le tableau VIII.

TABLEAU VIII

| Exemples | Sels de magnésium (poids en grammes) / Temps en minutes | | 0 | 7 | 14 | 21 | 30 | 40 | 50 | |
|---|---|---|---|---|---|---|---|---|---|---|
| 35 | Salicylate de magnésium | 0,16 | 0 | 0 | 0 | 0 | 0,5 | tâches brunes | brun | |
| 36 | Stéarate de magnésium | 0,12 | 0 | 0 | 0 | 0 | 0 | 0 | 1 | brun à 70 mn |
| 37 | Paratertiobutylbenzoate de magnésium | 0,12 | 0 | 0 | 0 | 0 | 0 | 0,5 | 2 | brun à 70 mn |

EXEMPLES 38 ET 39 :

Dans ces exemples on utilise des sels de baryum comme dérivé organique d'un métal du groupe 2a.

A deux fractions de 100 g chacune de la composition de base E) on ajoute respectivement l'un des deux sels de baryum indiqués dans le tableau IX ci-après.

Avec les compositions stabilisées ainsi obtenues, on prépare par calandrage de 8 minutes à 150 °C des feuilles de un millimètre d'épaisseur. On effectue le test de vieillissement thermique à 180 °C. Les indices de coloration GARDNER mesurés sont rassemblés dans le tableau IX.

TABLEAU IX

| Exemples | Sels de baryum (poids en grammes) / Temps en minutes | | 0 | 7 | 14 | 21 | 30 | 40 | 55 | |
|---|---|---|---|---|---|---|---|---|---|---|
| 38 | Stéarate de baryum | 0,09 | 0 | 1 | 2 | 2,5 | 1 | 1 | bords noirs | noirs à 60 mn |
| 39 | Paratertiobutylbenzoate de baryum | 0,09 | 0 | 1 | 2,5 | 1,5 | 1,5 | 1 | bords noirs | noirs à 63 mn |

EXEMPLES 40 à 44 :

Dans ces exemples on utilise des associations binaires ou ternaires de sels de métaux du groupe 2a dans les compositions stabilisantes selon l'invention.

A cinq fractions de 100 g chacune de la composition de base G) on ajoute respectivement l'une des différentes associations de sels de métaux du groupe 2a indiquées dans le tableau X ci-après.

Avec les compositions stabilisées ainsi obtenues on prépare par calandrage de 8 minutes à 150 °C des feuilles de un millimètre d'épaisseur. On effectue le test de vieillissement thermique à 180 °C. Les indices de coloration GARDNER mesurés sont rassemblés dans le tableau X.

TABLEAU X

| Exemples | Association de sels de métaux du groupe 2a (poids en grammes) \ Temps en minutes | | 0 | 7 | 14 | 21 | 30 | 40 | 50 | 70 |
|---|---|---|---|---|---|---|---|---|---|---|
| 40 | Stéarate de calcium<br>Stéarate de magnésium | 0,06<br>0,06 | 0 | 0 | 0 | 0 | 0 | 0 | 0,5 | bords noirs |
| 41 | Stéarate de calcium<br>Paratertiobutylbenzoate de magnésium | 0,06<br>0,06 | 0 | 0 | 0 | 0 | 0 | 0 | 0,5 | bords noirs |
| 42 | Paratertiobutylbenzoate de calcium<br>Stéarate de magnésium | 0,06<br>0,06 | 0 | 0 | 0 | 0 | 0 | 0 | 1 | bords noirs |
| 43 | Paratertiobutylbenzoate de calcium<br>Salicylate de magnésium | 0,06<br>0,06 | 0 | 0 | 0 | 0 | 0 | 0 | 0,5 | noir |
| 44 | Salicylate de calcium<br>Salicylate de magnésium | 0,05<br>0,05 | 0 | 0 | 0 | 0 | 0 | 0 | 0 | noir |

EXEMPLES 45 à 50 :

Dans ces exemples on fait varier l'anion du dérivé organique de zinc des compositions stabilisantes de l'invention.

On prépare la composition de base H) suivante :

- 654 g du même PVC que dans l'exemple 1,
- 326 g de phtalate de dioctyle,
- 10 g d'huile de soja époxydée,
- 3,2 g de thioglycolate de bis (hydroxy-2 éthoxy)-4,4' diphényl-2,2 propane (BHEDP)
- 1,2 g de stéarate de calcium,
- 0,2 g de sorbitol.

A six fractions de 100 g chacune de composition H) on ajoute respectivement l'un des six dérivés organiques de zinc indiqués dans le tableau XI ci-après.

Avec les compositions stabilisées ainsi obtenues, on prépare par calandrage de 8 minutes à 150 °C des feuilles de un millimètre d'épaisseur.

On effectue le test de vieillissement thermique à 180 °C. Les indices de coloration GARDNER mesurés sont rassemblés dans le tableau XI.

BAD ORIGINAL

TABLEAU XI

| Exemples | Stabilisants (poids en grammes) \ Temps en minutes | | 0 | 7 | 14 | 21 | 30 | 40 | 55 | |
|---|---|---|---|---|---|---|---|---|---|---|
| 45 | Stéarate de zinc | 0,07 | 0 | 0 | 0 | 0 | 0 | 0 | 1 | bords noirs à 75 mn |
| 46 | Ethyl-2 hexanoate de zinc | 0,03 | 0 | 0 | 0 | 0 | 0 | 0 | bords noirs | |
| 47 | Paratertiobutylbenzoate de zinc | 0,05 | 0 | 1 | 2 | 2 | 2 | 1 | 1 | 3 à 75 mn |
| 48 | Sel de zinc du maléate de mono éthyl-2 hexyle | 0,05 | 0 | 0 | 0,5 | 2 | 2 | 2 | 3 | brun à 75 mn |
| 49 | Nonylphénate de zinc | 0,1 | 0 | 0 | 0 | 0 | 0 | 0 | 2 | noir à 64 mn |
| 50 | Zinciosulfuro-2 acétate d'isooctyle | 0,09 | 0 | 0 | 0 | 0 | 0 | 0 | 3 | noir à 63 mn |

EXEMPLES 51 à 61 :

On exemplifie divers couples de dérivés organiques du zinc et de dérivés organiques du calcium.

On prépare la composition de base J) suivante :

- 981 g du même PVC que dans l'exemple 1,
- 489 g de phtalate de dioctyle,
- 15 g d'huile de soja époxydée,
- 4,2 g de thioglycolate de bis(hydroxyméthyl)-1,4 cyclohexane,
- 0,3 g de sorbitol.

A onze fractions de 100 g chacune de composition J) on ajoute respectivement l'un des onze couples dérivé du zinc et dérivé du calcium indiqués dans le tableau XII ci-après.

Avec les compositions stabilisées ainsi obtenues on prépare par calandrage de 8 minutes à 150 °C des feuilles de un millimètre d'épaisseur.

On effectue le test de vieillissement thermique à 175 °C. Les indices de coloration GARDNER mesurés sont rassemblés dans le tableau XII.

TABLEAU XII

| Exemple | Stabilisants (poids en grammes | Temps en minutes | 0 | 7 | 14 | 21 | 30 | 40 | 60 | |
|---|---|---|---|---|---|---|---|---|---|---|
| 51 | Stéarate de zinc<br>Stéarate de calcium | 0,07<br>0,12 | 0 | 0 | 0 | 0 | 0 | 0 | 0 | bords noirs à 100 mn |
| 52 | Stéarate de zinc<br>Para-tertiobutylbenzoate Ca | 0,07<br>0,12 | 0 | 0 | 0 | 0 | 0 | 0 | 0 | bords noirs à 100 mn |
| 53 | Stéarate de zinc<br>Salicylate de calcium | 0,07<br>0,06 | 0 | 0 | 0 | 0 | 0 | 0 | 0,5 | brun à 99 mn |
| 54 | Stéarate de zinc<br>Benzoate de calcium | 0,07<br>0,12 | 0 | 0 | 0 | 0 | 0 | 0 | 1 | brun à 73 mn |
| 55 | Ethyl-2 hexanoate de zinc<br>Stéarate de calcium | 0,03<br>0,15 | 0 | 0 | 0 | 0 | 0 | 0 | 0 | 3 à 100 mn |

TABLEAU XII (suite)

| | | | | | | | | | | |
|---|---|---|---|---|---|---|---|---|---|---|
| 56 | Ethyl-2 hexanoate de zinc<br>Octanoate de calcium | 0,03<br>0,09 | 0 | 0 | 0 | 0,5 | 0,5 | 0,5 | 0,5 | 4 à 100 mn |
| 57 | Ethyl-2 hexanoate de zinc<br>Paratertiobutylbenzoate de CaO | 0,03<br>0,15 | 0 | 0 | 0 | 0 | 0 | 0 | 0,5 | 3 à 100 mn |
| 58 | Nonylphénate de zinc<br>Paratertiobutylbenzoate de CaO | 0,08<br>0,16 | 0 | 0 | 0 | 0 | 0 | 0 | 0 | brun à 97 mn |
| 59 | Nonylphénate de zinc<br>Octanoate de calcium | 0,08<br>0,18 | 0 | 0,5 | 0,5 | 0,5 | 0,5 | 0,5 | 0,5 | brun à 92 mn |
| 60 | Paratertiobutylbenzoate zinc<br>Paratertiobutylbenzoate de CaO | 0,08<br>0,12 | 0 | 0 | 0 | 0 | 0 | 0 | 0 | brun à 98 mn |
| 61 | Zinciosulfuro-2 acétate d'isooctyle<br>Paratertiobutylbenzoate de CaO | 0,07<br>0,12 | 0 | 0 | 0 | 0 | 0 | 0 | 0,5 | brun à 98 mn |

EXEMPLES 62 à 68 :

Ces exemples concernent l'utilisation de différents polyols dans les compositions stabilisantes selon l'invention.

On prépare la composition de base K) suivante :

- 654 g du même PVC que dans l'exemple 1,
- 326 g de phtalate de dioctyle,
- 10 g d'huile de soja époxydée,
- 1,2 g de stéarate de calcium,
- 0,7 g de stéarate de zinc,
- 2,8 g de thioglycolate de bisphénol A hydrogéné.

A sept fractions de 100 grammes chacune de composition K) on ajoute respectivement l'un des polyols indiqués dans le tableau XIII ci-après.

Avec les compositions stabilisées ainsi obtenues ainsi qu'avec un échantillon de la composition K) on prépare par calandrage de 8 minutes à 150 °C des feuilles de un millimètre d'épaisseur. On effectue le test de vieillissement thermique à 180 °C. Les indices de coloration GARDNER mesurés sont rassemblés dans le tableau XIII.

TABLEAU XIII

| Exemples | Polyols (poids en grammes) | Temps en minutes | 0 | 7 | 14 | 21 | 30 | 40 | 55 | |
|---|---|---|---|---|---|---|---|---|---|---|
| | Composition K seule | | 0 | 0 | 1 | 2 | 3 | bords noirs | | |
| 62 | Sorbitol | 0,03 | 0 | 0 | 0 | 0 | 0 | 0 | 0 | noir à 85 mn |
| 63 | Mannitol | 0,03 | 0 | 0 | 0 | 0 | 0 | 0 | 0 | noir à 85 mn |
| 64 | Xylitol | 0,03 | 0 | 0 | 0 | 0 | 0 | 0 | 1 | noir à 70 mn |
| 65 | Triméthylolpropane — | 0,08 | 0 | 0 | 0 | 0 | 0 | 3 | noir | |
| 66 | Pentaérythrol | 0,12 | 0 | 0 | 0 | 0 | 0 | 5 | taches brunes | |
| 67 | Dipentaérythrol | 0,04 | 0 | 0 | 0 | 0 | 0 | 3 | 5 | 7 à 80 mn |
| 68 | Diglycérol | 0,06 | 0 | 0 | 0 | 0 | 2 | 3 | 4 | bords noirs à 80 mn |

EXEMPLE 69 :

Cet exemple illustre l'utilisation d'une composition stabilisante selon l'invention avec un PVC très plastifié.

On prépare la composition suivante :

- 54 g du même PVC que dans l'exemple 1,
- 42,3 g de phtalate de dioctyle,
- 3,0 g d'huile de soja époxydée,
- 0,20 g de phosphite de trinonylphényle,
- 0,07 g de stéarate de zinc,
- 0,15 g de stéarate de calcium,
- 0,21 g de thioglycolate de bisphénol A hydrogéné,
- 0,03 g de sorbitol.

Avec cette composition on prépare par calandrage de 4 minutes à 150 °C une feuille de un millimètre d'épaisseur. On effectue le test de vieillissement thermique à 190 °C. Les indices de coloration GARDNER obtenus sont rassemblés dans le tableau XIV ci-après.

TABLEAU XIV

| Temps en minutes | 0 | 7 | 14 | 21 | 30 | 40 | 55 | 80 |
|---|---|---|---|---|---|---|---|---|
| Indices GARDNER | 0 | 0 | 0 | 0 | 0 | 2 | 6 | 7 |

EXEMPLE 70 :

On prépare la composition suivante :

- 75,3 g du même PVC que dans l'exemple 1,
- 22,8 g de phtalate de dioctyle,
- 1,15 g d'huile de soja époxydée,
- 0,23 g de phosphite de trinonylphényle,
- 0,09 g de stéarate de zinc,
- 0,18 g de stéarate de calcium,
- 0,23 g de thioglycolate de bisphénol A hydrogéné,
- 0,04 g de sorbitol.

Avec cette composition on prépare par calandrage de 4 minutes à 170 °C une feuille de un millimètre d'épaisseur. On effectue le test de vieillissement thermique à 180 °C. Les indices de coloration GARDNER obtenus sont rassemblés dans le tableau XV ci-après.

TABLEAU XV

| Temps en minutes | 0 | 7 | 14 | 21 | 30 | 40 | 55 | 80 |
|---|---|---|---|---|---|---|---|---|
| Indices GARDNER | 0 | 0 | 0 | 0 | 0,5 | 1 | 3 | noir |

EXEMPLE 71 :

On prépare la composition suivante :

- 78,6 g de PVC en poudre, caractérisé par un indice de viscosité de 80 selon la norme NF T51013, obtenu par polymérisation en masse et vendu sous la dénomination commerciale LUCOVYL RB 8010,
- 15,3 g de phtalate de dioctyle,
- 3,7 g d'huile de soja époxydée,
- 0,75 g de phosphite de trinonylphényle,
- 0,26 g de stéarate de zinc,
- 0,53 g de stéarate de calcium,
- 0,75 g de thioglycolate de bisphénol A hydrogéné,
- 0,11 g de sorbitol.

Avec cette composition, on prépare par calandrage de 4 minutes à 170 °C une feuille de un millimètre d'épaisseur. On effectue le test de vieillissement thermique à 190 °C. Les indices de coloration GARDNER obtenus sont rassemblés dans le tableau XVI ci-après.

TABLEAU XVI

| Temps en minutes | 0 | 7 | 14 | 21 | 30 | 40 | 55 | 90 |
|---|---|---|---|---|---|---|---|---|
| Indices GARDNER | 0 | 0 | 0 | 0 | 0,5 | 1 | 3 | noir |

EXEMPLES 72 à 74 :

Ces exemples illustrent l'utilisation de compositions stabilisantes selon l'invention avec un PVC rigide.

On prépare la composition de base L) suivante :

- 1 000 g de PVC en poudre, caractérisé par un indice de viscosité de 80 selon la norme NF T51013, obtenu par polymérisation en suspension et vendu sous la dénomination commerciale LUCOVYL RS 8 000,
- 100 g d'un renforçateur de choc qui est un copolymère de butadiène, de styrène et de méthacrylate de méthyle,
- 10 g d'un lubrifiant qui est une cire à base d'ester de colophane (commercialisé sous la marque CIRE E),
- 30 g d'huile de soja époxydée,
- 5 g de stéarate de zinc,
- 5 g de stéarate de calcium.

A six fractions de 100 g chacune de composition L) on ajoute respectivement, soit du sorbitol seul, soit un mélange de sorbitol et de thioglycolate de bis(hydroxyméthyl)-1,4 cyclohexane (TG de BHMC) en quantités indiquées dans le tableau XVII ci-après.

Les essais avec du sorbitol seul (72a, 73a, 74a) sont donnés à titre comparatif afin de montrer les avantages qu'apporte la composition à quatre constituants selon l'invention par rapport à des compositions ne comportant que trois de ces constituants.

Avec les compositions ainsi obtenues on prépare par calandrage de 3 minutes à 180 °C des feuilles de un millimètre d'épaisseur. On effectue le test de vieillissement thermique à 180 °C. Les indices de coloration GARDNER mesurés sont rassemblés dans le tableau XVII.

TABLEAU XVII

| Exemples et essais Comparatifs | Stabilisants (poids en grammes) \ Temps en minutes | | 0 | 7 | 14 | 21 | 30 | 40 | 50 | 60 | 70 |
|---|---|---|---|---|---|---|---|---|---|---|---|
| 72 | Sorbitol<br>TG de BHMC | 0,043<br>0,43 | 0 | 0 | 1 | 1 | 3 | 5 | noir | | |
| 72a | Sorbitol | 0,043 | 5 | 8 | 9 | 9 | 9 | 9 | noir | | |
| 73 | Sorbitol<br>TG de BHMC | 0,085<br>.0,43 | 0 | 0 | 0 | 0,5 | 2 | 4 | 5 | noir | |
| 73a | Sorbitol | 0,085 | 5 | 8 | 9 | 10 | 9 | 9 | 9 | 9 | noir |
| 74 | Sorbitol<br>TG de BHMC | 0,13<br>0,43 | 0 | 0 | 0 | 0,5 | 1,5 | 4 | 5 | 11 | noir |
| 74a | Sorbitol | 0,13 | 5 | 8 | 9 | 10 | 9 | 9 | 9 | 11 | noir |

REVENDICATIONS

1°) - Compositions stabilisantes pour polymères à base de chlorure de polyvinyle, caractérisées en ce qu'elles contiennent :

- a) au moins un dérivé organique du zinc,
- b) au moins un dérivé organique d'un métal du groupe 2a de la classification périodique des éléments,
- c) au moins un polyol,
- d) au moins un ester de l'acide thioglycolique.

2°) - Compositions selon la revendication 1, caractérisées en ce qu'elles contiennent :

- a) au moins un dérivé organique du zinc,
- b) au moins un dérivé organique d'un métal du groupe 2a de la classification périodique des éléments,
- c) au moins un polyol,
- d) au moins un ester thioglycolique de formule générale :

$$(HS - CH_2 - COO)_{\overline{n}} R \qquad (I)$$

dans laquelle :

- n est un nombre entier égal à 1, 2, 3 ou 4,
- R représente un radical monovalent ou polyvalent qui peut être :

. un radical aliphatique linéaire ou ramifié, saturé ou comportant une ou plusieurs insaturations éthyléniques, et pouvant comprendre un ou plusieurs des enchaînements - O - , - S -,

. un radical cycloaliphatique, éventuellement porteur de 1 ou plusieurs substituants alkyles ou alkoxy, et pouvant comporter une ou plusieurs insaturations éthyléniques,

. un radical aryle ou arylaliphatique, la partie cyclique portant éventuellement un ou plusieurs substituants alkyles ou alkoxy et pouvant être liée à la partie aliphatique par un atome d'oxygène - O -,

. un radical trisalkylèneisocyanurate,

. un radical $- R_1 - COO - R_2 -$ lorsque n = 2, $R_1$ et $R_2$ étant des radicaux aliphatiques linéaires ou ramifiés, saturés

ou comportant une ou plusieurs insaturations éthyléniques,

. un enchaînement de plusieurs des radicaux précédemment cités.

3°) - Compositions selon l'une des revendications 1 et 2, caractérisées en ce qu'elles contiennent :

- a) au moins un dérivé organique du zinc choisi dans le groupe comprenant les sels d'acides carboxyliques, les dérivés des composés phénoliques, les mercaptides et les chélates de composés β-dicarbonylés,

- b) au moins un dérivé organique d'un métal du groupe 2a de la classification périodique des éléments choisi dans le groupe comprenant les sels d'acides carboxyliques, les dérivés des composés phénoliques, les mercaptides et les chélates de composés β-dicarbonylés de calcium, de magnésium, de baryum et de strontium,

- c) au moins un polyol,

- d) au moins un ester thioglycolique de formule générale (I) :

$$(HS - CH_2 - COO)_{\overline{n}} R$$

dans laquelle :

- n est un nombre entier égal à 1, 2 ou 3,

- si n = 1, R est :

- un radical alkyle ou alkényle, linéaire ou ramifié, ayant de 6 à 36 atomes de carbone,

- un radical phényle ou phénylalkyle ou cyclohexyle ou cyclohexylalkyle, dont le cycle est éventuellement substitué par un ou plusieurs radicaux alkyles ou alkoxy inférieurs et dont l'éventuelle partie aliphatique comprend de 1 à 6 atomes de carbone et peut être liée au cycle par un atome d'oxygène - O -,

- un enchaînement de plusieurs des radicaux précédents.

- si n = 2, R est :

- un radical alkylène linéaire ou ramifié ayant de 2 à 24 atomes de carbone,

- un radical cyclohexylène, ou un radical cyclohexylènealkyle ou un radical cyclohexylènedialkyle dont le cycle est éventuellement substitué par un ou plusieurs radicaux alkyles ou

alkoxy inférieurs et dont les éventuelles parties aliphatiques comprennent de 1 à 6 atomes de carbone et peuvent être liées au cycle par un atome d'oxygène - O -,

- un radical phénylène ou phénylènealkyle ou phénylènedialkyle, dont le cycle est éventuellement substitué par un ou plusieurs radicaux alkyles ou alkoxy inférieurs et dont les éventuelles parties aliphatiques comprennent de 1 à 6 atomes de carbone et peuvent être liées au cycle par un atome d'oxygène - O -,

- un radical $- R_1 - COO - R_2 -$, $R_1$ et $R_2$, identiques ou différents, étant des radicaux aliphatiques linéaires ou ramifiés, saturés ou comportant une ou plusieurs insaturations éthyléniques et ayant de 1 à 18 atomes de carbone,

- un enchaînement de plusieurs des radicaux précédents.

- si n = 3, R est :

- un radical aliphatique trivalent linéaire ou ramifié ayant de 3 à 24 atomes de carbone,

- un radical trisalkylèneisocyanurate dans lequel les restes alkylènes ont de 1 à 4 atomes de carbone.

4°) - Compositions selon l'une quelconque des revendications 1 à 3, caractérisées en ce qu'elles contiennent un ester thioglycolique de formule (I) dans laquelle n = 2.

5°) - Compositions selon l'une quelconque des revendications 1 à 4, caractérisées en ce qu'elles contiennent comme dérivé organique du zinc au moins un sel d'acide carboxylique et/ou un phénate.

6°) - Compositions selon l'une quelconque des revendications 1 à 5, caractérisées en ce qu'elles contiennent comme dérivé organique d'un métal du groupe 2a au moins un sel d'acide carboxylique et/ou un phénate.

7°) - Compositions selon l'une quelconque des revendications 1 à 6, caractérisées en ce que le dérivé organique d'un métal du groupe 2a de la classification périodique des éléments qu'elles contiennent est un dérivé du calcium ou du magnésium ou un mélange de dérivés du calcium et du magnésium.

8°) - Compositions selon l'une quelconque des revendications 1 à 7, caractérisées en ce que le polyol qu'elles contiennent comprend

plus de quatre groupes hydroxyle.

9°) - Compositions selon l'une quelconque des revendications 1 à 8, caractérisées en ce qu'elles contiennent au moins un polyol choisi dans le groupe formé par le sorbitol, le mannitol et le xylitol.

10°) - Procédé de stabilisation de polymères à base de chlorure de polyvinyle, caractérisé par l'emploi conjoint des constituants des compositions stabilisantes selon l'une des revendications 1 à 9.

11°) - Composition à base de chlorure de polyvinyle, caractérisée en ce qu'elle contient une composition stabilisante selon l'une quelconque des revendications 1 à 9.

12°) - Composition selon la revendication 11, caractérisée en ce qu'elle comprend de 0,005 à 1 % en poids, et de préférence de 0,01 à 0,6 % en poids de dérivé organique du zinc entrant dans la composition stabilisante, par rapport au polymère à stabiliser.

13°) - Composition selon l'une des revendications 11 et 12, caractérisée en ce qu'elle comprend de 0,01 à 5 % en poids et de préférence de 0,03 à 1 % en poids de dérivé organique de métal du groupe 2a de la classification périodique des éléments entrant dans la composition stabilisante par rapport au polymère à stabiliser.

14°) - Composition selon l'une des revendications 11 à 13, caractérisée en ce qu'elle comprend de 0,005 % à 1 % en poids et de préférence de 0,01 % à 0,6 % en poids de polyol entrant dans la composition stabilisante par rapport au polymère à stabiliser.

15°) - Composition selon l'une des revendications 11 à 14, caractérisée en ce qu'elle comprend de 0,005 % à 5 % en poids et de préférence de 0,05 % à 1,5 % en poids d'ester thioglycolique entrant dans la composition stabilisante par rapport au polymère à stabiliser.

16°) - Composition selon l'une des revendications 11 à 15, caractérisée en ce qu'elle comprend de 5 % à 120 % en poids par rapport au polymère d'un plastifiant.

17°) - Objets conformés obtenus à partir des compositions selon l'une des revendications 11 à 16.

- AUTRICHE -

## REVENDICATIONS

1°) - Procédé de stabilisation de polymères à base de chlorure de polyvinyle, caractérisé par l'emploi conjoint :

- a) d'au moins un dérivé organique du zinc,
- b) d'au moins un dérivé organique d'un métal du groupe 2a de la classification périodique des éléments,
- c) d'au moins un polyol,
- d) d'au moins un ester de l'acide thioglycolique.

2°) - Procédé selon la revendication 1, caractérisé par l'emploi conjoint :

- a) d'au moins un dérivé organique du zinc,
- b) d'au moins un dérivé organique d'un métal du groupe 2a de la classification périodique des éléments,
- c) d'au moins un polyol,
- d) d'au moins un ester thioglycolique de formule générale :

$$(HS - CH_2 - COO)_{\overline{n}} R \qquad (I)$$

dans laquelle :

- n est un nombre entier égal à 1, 2, 3 ou 4,
- R représente un radical monovalent ou polyvalent qui peut être :
  . un radical aliphatique linéaire ou ramifié, saturé ou comportant une ou plusieurs insaturations éthyléniques, et pouvant comprendre un ou plusieurs des enchaînements - O - , - S -,
  . un radical cycloaliphatique, éventuellement porteur de 1 ou plusieurs substituants alkyles ou alkoxy, et pouvant comporter une ou plusieurs insaturations éthyléniques,
  . un radical aryle ou arylaliphatique, la partie cyclique portant éventuellement un ou plusieurs substituants alkyles ou alkoxy et pouvant être liée à la partie aliphatique par un atome d'oxygène

- O -,

. un radical trisalkylèneisocyanurate,

. un radical $- R_1 - COO - R_2 -$ lorsque n = 2, $R_1$ et $R_2$ étant des radicaux aliphatiques linéaires ou ramifiés, saturés ou comportant une ou plusieurs insaturations éthyléniques,

. un enchaînement de plusieurs des radicaux précédemment cités.

3°) - Procédé selon l'une des revendications 1 et 2, caractérisé par l'emploi conjoint :

- a) d'au moins un dérivé organique du zinc choisi dans le groupe comprenant les sels d'acides carboxyliques, les dérivés des composés phénoliques, les mercaptides et les chélates de composés ß-dicarbonylés,

- b) d'au moins un dérivé organique d'un métal du groupe 2a de la classification périodique des éléments choisi dans le groupe comprenant les sels d'acides carboxyliques, les dérivés des composés phénoliques, les mercaptides et les chélates de composés ß-dicarbonylés de calcium, de magnésium, de baryum et de strontium,

- c) d'au moins un polyol,

- d) d'au moins un ester thioglycolique de formule générale (I) :

$$(HS - CH_2 - COO)_{\overline{n}} R$$

dans laquelle :

- n est un nombre entier égal à 1, 2 ou 3,

- si n = 1, R est :

- un radical alkyle ou alkényle, linéaire ou ramifié, ayant de 6 à 36 atomes de carbone,

- un radical phényle ou phénylalkyle ou cyclohexyle ou cyclohexylalkyle, dont le cycle est éventuellement substitué par un ou plusieurs radicaux alkyles ou alkoxy inférieurs et dont l'éventuelle partie aliphatique comprend de 1 à 6 atomes de carbone et peut être liée au cycle par un atome d'oxygène - O -,

- un enchaînement de plusieurs des radicaux précédents.

- si n = 2, R est :

- un radical alkylène linéaire ou ramifié ayant de 2 à

24 atomes de carbone,

- un radical cyclohexylène, ou un radical cyclohexylènealkyle ou un radical cyclohexylènedialkyle dont le cycle est éventuellement substitué par un ou plusieurs radicaux alkyles ou alkoxy inférieurs et dont les éventuelles parties aliphatiques comprennent de 1 à 6 atomes de carbone et peuvent être liées au cycle par un atome d'oxygène - O -,

- un radical phénylène ou phénylènealkyle ou phénylènedialkyle, dont le cycle est éventuellement substitué par un ou plusieurs radicaux alkyles ou alkoxy inférieurs et dont les éventuelles parties aliphatiques comprennent de 1 à 6 atomes de carbone et peuvent être liées au cycle par un atome d'oxygène - O -,

- un radical $- R_1 - COO - R_2 -$, $R_1$ et $R_2$, identiques ou différents, étant des radicaux aliphatiques linéaires ou ramifiés, saturés ou comportant une ou plusieurs insaturations éthyléniques et ayant de 1 à 18 atomes de carbone,

- un enchaînement de plusieurs des radicaux précédents.

- si n = 3, R est :

- un radical aliphatique trivalent linéaire ou ramifié ayant de 3 à 24 atomes de carbone,

- un radical trisalkylèneisocyanurate dans lequel les restes alkylènes ont de 1 à 4 atomes de carbone.

4°) - Procédé selon l'une quelconque des revendications 1 à 3, caractérisé par l'emploi d'un ester thioglycolique de formule (I) dans laquelle n = 2.

5°) - Procédé selon l'une quelconque des revendications 1 à 4, caractérisé par l'emploi comme dérivé organique du zinc d'au moins un sel d'acide carboxylique et/ou un phénate.

6°) - Procédé selon l'une quelconque des revendications 1 à 5, caractérisé par l'emploi comme dérivé organique d'un métal du groupe 2a de la classification périodique des éléments d'au moins un sel d'acide carboxylique et/ou un phénate.

7°) - Procédé selon l'une quelconque des revendications 1 à 6, caractérisé par l'emploi comme dérivé organique d'un métal du groupe 2a de la classification périodique des éléments d'un dérivé du

calcium ou du magnésium ou d'un mélange de dérivés du calcium et du magnésium.

8°) - Procédé selon l'une quelconque des revendications 1 à 7, caractérisé par l'emploi d'un polyol comprenant plus de quatre groupes hydroxyle.

9°) - Procédé selon l'une quelconque des revendications 1 à 8, caractérisé par l'emploi d'un polyol choisi dans le groupe formé par le sorbitol, le mannitol et le xylitol.

10°) - Procédé selon l'une quelconque des revendications 1 à 9, caractérisé par l'emploi de 0,005 % à 1 % en poids et de préférence de 0,01 % à 0,6 % en poids de dérivé organique du zinc par rapport au polymère à stabiliser.

11°) - Procédé selon l'une quelconque des revendications 1 à 10, caractérisé par l'emploi de 0,01 % à 5 % en poids et de préférence de 0,03 % à 1 % en poids de dérivé organique d'un métal du groupe 2a de la classification périodique des éléments, par rapport au polymère à stabiliser.

12°) - Procédé selon l'une quelconque des revendications 1 à 11, caractérisé par l'emploi de 0,005 % à 1 % en poids et de préférence 0,01 % à 0,6 % de polyol par rapport au polymère à stabiliser.

13°) - Procédé selon l'une quelconque des revendications 1 à 12, caractérisé par l'emploi de 0,005 % à 5 % en poids et de préférence de 0,05 % à 1,5 % en poids d'ester thioglycolique par rapport au polymère à stabiliser.

14°) - Procédé selon l'une quelconque des revendications 1 à 13, caractérisé en ce que l'on incorpore en outre de 5 % à 120 % en poids d'un plastifiant par rapport au polymère à stabiliser.

15°) - Objets conformés obtenus à partir des polymères stabilisés par le procédé selon l'une des revendications 1 à 14.

0022047

Office européen des brevets

# RAPPORT DE RECHERCHE EUROPEENNE

Numéro de la demande

EP 80 42 0077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | FR - A - 2 392 079 (SEKISUI)<br>* Revendications; page 4, alinéa 2 - page 5, alinéa 1 *<br>-- | 1 | C 08 L 27/06 |
| | DE - A - 2 652 483 (KAOSOAP)<br>* Revendication 1 *<br>-- | 1 | |
| | CHEMICAL ABSTRACTS, vol. 74, 1971, réf.: 64988p, page 41<br>Columbus, Ohio, US<br>& JP - B - 70 25383 (KUREHA) (22-08-70)<br>* Abrégé en entier *<br>---- | 1 | DOMAINES TECHNIQUES RECHERCHES (Int. Cl. 3)<br>C 08 L 27/06<br>C 08 K 5/00 |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 23-09-1980 | FOUQUIER |